# EUROPEAN PATENT APPLICATION

(11) **EP 3 930 039 A1**
(43) Date of publication of application: **29.12.2021**
(21) Application number: 20758690.0
(22) Date of filing: 18.02.2020
(51) Int. Cl.: H01M 4/13, H01M 4/131, H01M 4/134, H01M 4/136, H01M 4/36, H01M 4/38, H01M 4/48, H01M 4/485, H01M 4/505, H01M 4/525, H01M 4/58, H01M 4/62, C01B 32/15

(54) **BATTERY MATERIAL**

(30) Priority: 21.02.2019 JP 2019029693
(71) Applicant: Nissan Chemical Corporation, Tokyo 103-6119 (JP)
(72) Inventor: KASEYAMA Takahiro, Funabashi-shi, Chiba 274-0052 (JP); ODAKA Kazutoshi, Funabashi-shi, Chiba 274-0052 (JP); KATO Hirokazu, Funabashi-shi, Chiba 274-0052 (JP); ISAJI Tadayuki, Funabashi-shi, Chiba 274-0052 (JP)
(74) Representative: Mewburn Ellis LLP
(86) International application number: PCT/JP2020/006319
(87) International publication number: WO 2020/171075

(57) **Abstract**

Provided is a battery material characterized by containing a carbon nanostructure which emits light when excited at a certain wavelength in a wavelength range of 300-800 nm.

## Description

### TECHNICAL FIELD

The present invention relates to a battery material containing a carbon nanostructure.

### BACKGROUND ART

In recent years, downsizing and weight reduction of electronic devices have been promoted, and downsizing and weight reduction of batteries serving as power sources for the electronic devices have also been required. Nonaqueous electrolyte secondary batteries such as lithium ion batteries have been put into practical use as batteries which are downsized, weight-reduced, and chargeable and dischargeable, and have a high capacity, and have been used in portable electronic devices such as small video cameras, mobile phones, and notebook computers, and communication devices and the like.

The lithium ion secondary battery has a high energy density, and has excellent advantages such as a higher capacity and operating voltage than those of other batteries. However, the high energy density may cause a risk of overheating or an accident such as fire depending on the usage condition, and high safety is required for the lithium ion secondary battery. In particular, since a higher energy density and output characteristics are required for hybrid vehicles which have recently been in the spotlight, much higher safety is required for the lithium ion secondary battery.

In general, a lithium ion secondary battery is composed of a positive electrode, a negative electrode, and an electrolyte. During the charge, lithium ions are discharged from a positive electrode active material into the electrolyte, and are intercalated into a negative electrode active material such as carbon particles. During the discharge, lithium ions are discharged from a negative electrode active material into the electrolyte, and are intercalated into a positive electrode active material, whereby a current can be taken out to an external circuit. As described above, in the lithium ion secondary battery, the lithium ions move back and forth between the positive electrode and the negative electrode via the electrolyte, whereby charge and discharge are performed.

Meanwhile, as the performance of portable electronic devices and the like is improved, batteries having a higher capacity are required. Sn and Si and the like, which have a capacity per unit weight much higher than that of existing carbon, have been actively studied as a negative electrode active material. However, when Si or a Si alloy is used as the negative electrode active material, volume expansion increases, which disadvantageously causes deteriorated cycle characteristics. In order to solve this problem, the Si or the Si alloy may be mixed with graphite. However, when the graphite may be non-uniformly distributed during the mixing, the cycle characteristics (life) may be deteriorated.

In recent years, with the versatility of lithium ion secondary batteries such as high-output power supplies for plug-in hybrid vehicles, hybrid vehicles, and electric tools and the like, further improvement in rate characteristics is required. Batteries used as the high-output power supplies are required to be charged and discharged at high speed.

In the positive electrode active material currently put to practical use, the theoretical capacity of the positive electrode active material is much lower than that of the negative electrode active material. This makes it necessary to impart high conductivity and ion conductivity to the positive electrode in order to achieve the high capacity and high output of the lithium ion battery. Therefore, in order to improve electron conductivity in the positive electrode, a method for adding a carbon material to an electrode as a conductive additive is used. As such a carbon material, graphite, acetylene black, and Ketjen black have been reported. In recent years, examples using carbon nanotube and graphene have been reported. However, if the amount of such a conductive additive is increased, the amount of the active material in the electrode decreases, whereby the capacity of the battery decreases.

There has also been proposed an electrode material in which the particle surface of an electrode active material is covered with an organic compound as a carbon source, and the organic compound is then carbonized to form a carbonaceous film on the surface of the electrode active material, whereby carbon of the carbonaceous film is interposed as an electron conductive substance in order to improve the electron conductivity of the electrode material (for example, Patent Document 1). However, the carbonization step requires a long-time heat treatment at a high temperature of 500°C or higher in an inert gas atmosphere. This heat treatment reduces the capacity of the electrode. Since the electrode material is heated at a high temperature of 500 to 800°C in a reducing atmosphere or an inert atmosphere during the carbonization treatment, the positive electrode active material itself may also be reduced, whereby the usable positive electrode active material is limited to lithium iron phosphate, lithium nickel phosphate, lithium cobalt phosphate, and lithium manganese phosphate and the like. The carbon source in the case of the other positive electrode active materials is limited to a polymer material having conductivity.

### PRIOR ART DOCUMENTS

### PATENT DOCUMENTS

Patent Document 1: JP-A 2001-15111

### SUMMARY OF INVENTION

### TECHNICAL PROBLEM

The present invention has been made in view of the above circumstances, and an object of the present invention is to provide a battery material that can be suitably used as a material for forming a battery such as a lithium ion secondary battery and can improve the rate characteristics of the battery.

### SOLUTION TO PROBLEM

As a result of intensive studies to achieve the above object, the present inventors have found that a battery produced by using a battery material containing a light-emitting carbon nanostructure has excellent rate characteristics, and have completed the present invention.

That is, the present invention provides the following battery material.
1. A battery material including a carbon nanostructure, wherein the carbon nanostructure emits light when excited at any wavelength of 300 to 800 nm.
2. The battery material according to 1, wherein an absolute quantum yield of the carbon nanostructure is 10% or more.
3. The battery material according to 2, wherein the absolute quantum yield of the carbon nanostructure is 30% or more.
4. The battery material according to any one of 1 to 3, wherein the carbon nanostructure is a carbon quantum dot.
5. The battery material according to any one of 1 to 4, wherein the carbon nanostructure is non-conductive and contains nitrogen.
6. The battery material according to 5, wherein the nitrogen is derived from an amine.
7. The battery material according to any one of 1 to 6, wherein carbon contained in the carbon nanostructure is derived from a polycarboxylic acid or a saccharide.
8. The battery material according to any one of 1 to 7, further including an active material, conductive carbon, and a binder.
9. The battery material according to 8, wherein the active material is selected from a metal, a metalloid, a metal alloy, a metal oxide, a metalloid oxide, a metal phosphate, a metal sulfide, and a metal nitride.
10. The battery material according to 9, wherein the active material is at least one selected from FeS₂, TiS₂, MoS₂, LiFePO₄, V₂O₆, V₆O₁₃, MnO₂, LiCoO₂, LiMnO₂, LiMn₂O₄, LiMo₂O₄, LiV₃O₈, LiNiO₂, Li_{z}Ni_{y}M_{1-y}O₂ (provided that M represents at least one metal element selected from Co, Mn, Ti, Cr, V, Al, Sn, Pb, and Zn, 0.05 ≤ z ≤ 1.10, 0.5 ≤ y ≤ 1.0.), Li(NiₐCo_{b}Mn_{c})O₂ (provided that 0 < a < 1, 0 < b < 1, 0 < c < 1, a + b + c = 1), Li₄Ti₅O₁₂, Si, SiOₓ, AlOₓ, SnOₓ, SbOₓ, BiOₓ, GeOₓ, AsOₓ, PbOₓ, ZnOₓ, CdOₓ, InOₓ, TiOₓ, and GaOₓ (provided that 0 < x ≤ 2).
11. The battery material according to any one of 8 to 10, wherein the battery material is an electrode-forming battery material.
12. An electrode including an active material layer made of the battery material according to 11.
13. A secondary battery including the electrode according to 12.
14. A method for producing the battery material according to any one of 1 to 11, the method including the step of synthesizing a carbon nanostructure by mixing a polycarboxylic acid or a saccharide, an amine, and a solvent, followed by heating.
15. The method for producing a battery material according to 14, wherein the synthesis is performed by solvothermal synthesis.
16. The method for producing a battery material according to 15, wherein the synthesis is performed by hydrothermal synthesis.
17. The method for producing a battery material according to 16, including the step of replacing a solvent of an aqueous solution of the carbon nanostructure obtained by the hydrothermal synthesis with an organic solvent.
18. A method for producing the battery material according to any one of 8 to 10,
   the method including the step of preparing a solution or dispersion containing an active material and a carbon nanostructure, and then removing a solvent to prepare a composite of an active material-carbon nanostructure.

### ADVANTAGEOUS EFFECTS OF INVENTION

By using a battery material of the present invention, a battery having excellent rate characteristics can be provided.

### BRIEF DESCRIPTION OF DRAWINGS

[FIG. 1] FIG. 1 shows the fluorescence spectrum of an aqueous solution A1 obtained in Example 1-1.
[FIG. 2] FIG. 2 shows the fluorescence spectrum of an aqueous solution A2 obtained in Example 1-2.
[FIG. 3] FIG. 3 shows the fluorescence spectrum of an aqueous solution A3 obtained in Example 1-3.
[FIG. 4] FIG. 4 shows the fluorescence spectrum of an aqueous solution A4 obtained in Example 1-4.
[FIG. 5] FIG. 5 shows the fluorescence spectrum of an aqueous solution A5 obtained in Comparative Example 1-1.
[FIG. 6] FIG. 6 shows the fluorescence spectrum of an aqueous solution A6 obtained in Comparative Example 1-2.

### DESCRIPTION OF EMBODIMENTS

A battery material of the present invention contains a carbon nanostructure, and the carbon nanostructure emits light when excited at any wavelength of 300 to 800 nm. In the present invention, the use of the carbon nanostructure having such characteristics can provide a battery having excellent rate characteristics and cycle characteristics. The light emission of the carbon nanostructure can be confirmed using a known measurement apparatus. In the present invention, for example, the light emission of the obtained carbon nanostructure can be confirmed by measuring an aqueous solution of the carbon nanostructure with a spectrofluorometer F-7000 manufactured by Hitachi High-Tech Science Corporation in a state provided that an excitation wavelength is fixed to any wavelength of 300 to 800 nm. The excitation wavelength can be determined by a maximum absorption wavelength in absorption spectrum measurement.

The carbon nanostructure is generally a structure composed of carbon atoms a main component. At least one of three-dimensional dimensions of the structure is in a nanometer region, for example, has an order of several nanometers to several hundred nanometers.

The absolute quantum yield of the carbon nanostructure is preferably 10% or more, more preferably 30% or more, and still more preferably 50% or more from the viewpoint of further improving the discharge capacity of a battery to be obtained. The upper limit of the absolute quantum yield is not particularly limited, but is usually 90% or less. The absolute quantum yield can be confirmed using a known measurement apparatus. In the present invention, for example, the absolute quantum yield of the carbon nanostructure can be confirmed by measuring the maximum absorption wavelength in the absorption spectrum measurement for the aqueous solution of the obtained carbon nanostructure as an excitation wavelength with an absolute PL quantum yield meter manufactured by Hamamatsu Photonics K.K.

Examples of the carbon nanostructure include a carbon quantum dot, a graphene quantum dot, and a carbon material containing a fibrous π-conjugated polymer or a ring-condensed structure as a partial structure of graphene, which have the above-described light emission characteristics. Among these, a carbon quantum dot which is a carbon material having an average particle size of 20 nm or less is preferable.

The average particle size is a value measured by a transmission electron microscope (TEM).

The carbon nanostructure is preferably non-conductive from the viewpoint of further improving the discharge capacity of the battery to be obtained. In the present invention, "non-conductive" means that the conductivity of a powder of the obtained carbon nanostructure, measured with a low resistance meter Loresta-GP manufactured by Mitsubishi Chemical Analytech Co., Ltd. is equal to or less than the detection limit (the resistance value is more than 10⁷ Ω).

The carbon nanostructure preferably contains nitrogen. The nitrogen content of the carbon nanostructure is not particularly limited as long as it contains nitrogen, but is preferably 5 to 30 wt%, more preferably 10 to 25 wt%, and still more preferably 10 to 20 wt% in consideration of further improving the discharge capacity of the battery to be obtained.

The carbon nanostructure can be produced by a known method, and can be obtained, for example, by mixing a carbon source composed of a polycarboxylic acid or a saccharide and a nitrogen source composed of an amine as raw materials with a solvent, followed by heating.

The polycarboxylic acid is not particularly limited as long as it is a carboxylic acid having two or more carboxy groups. Specific examples thereof include quinic acid, galacturic acid, glyceric acid, gluconic acid, glucuronic acid, ascorbic acid, and gallic acid. Among these, citric acid, succinic acid, and oxalic acid are preferable, and citric acid is more preferable. The polycarboxylic acids may be used singly or in combination of two or more kinds thereof.

Examples of the saccharide include a monosaccharide, a disaccharide, and a polysaccharide. These saccharides may be used singly or in combination of two or more kinds thereof.

The monosaccharide preferably has 3 to 9 carbon atoms, and particularly 5 to 6 carbon atoms. Specific examples thereof include pentoses such as xylose; hexoses such as glucose, mannose, and galactose; deoxyhexoses such as fucose; hexosamines such as glucosamine and galactosamine; hexosamine derivatives such as N-acetylglucosamine and N-acetylgalactosamine; sialic acids such as neuraminic acid, N-acetylneuraminic acid, and N-glycolylneuraminic acid; and uronic acids such as glucuronic acid and iduronic acid. Among these, hexose is preferable, and glucose is more preferable. The monosaccharides may be used singly or in combination of two or more kinds thereof.

Examples of the disaccharide include sucrose, lactulose, lactose, maltose, trehalose, and cellobiose. The disaccharides may be used singly or in combination of two or more kinds thereof.

Examples of the polysaccharide include starch, amylose, amylopectin, glycogen, cellulose, chitin, agarose, carrageenan, heparin, hyaluronic acid, pectin, xyloglucan, and glucomannan. Among these, the polysaccharides which are dissolved in water are preferable from the viewpoint of synthesis. The polysaccharides may be used singly or in combination of two or more kinds thereof.

Examples of the amine include aliphatic amine, aromatic amine, hydroxylamine, polyamine, heterocyclic amine, amino acid, and amino group-containing polyalkylene glycol. Among these, aliphatic amine, aromatic amine, and amino acid are preferable. The amines may be used singly or in combination of two or more kinds thereof.

Examples of the aliphatic amine include monoamines such as methylamine, ethylamine, n-propylamine, isopropylamine, n-butylamine, isobutylamine, s-butylamine, t-butylamine, n-pentylamine, 1-methyl-n-butylamine, 2-methyl-n-butylamine, 3-methyl-n-butylamine, 1,1-dimethyl-n-propylamine, 1,2-dimethyl-n-propylamine, 2,2-dimethyl-n-propylamine, 1-ethyl-n-propylamine, n-hexylamine, 1-methyl-n-pentylamine, 2-methyl-n-pentylamine, 3-methyl-n-pentylamine, 4-methyl-n-pentylamine, 1,1-dimethyl-n-butylamine, 1,2-dimethyl-n-butylamine, 1,3-dimethyl-n-butylamine, 2,2-dimethyl-n-butylamine, 2,3-dimethyl-n-butylamine, 3,3-dimethyl-n-butylamine, 1-ethyl-n-butylamine, 2-ethyl-n-butylamine, 1,1,2-trimethyl-n-propylamine, 1,2,2-trimethyl-n-propylamine, 1-ethyl-1-methyl-n-propylamine, 1-ethyl-2-methyl-n-propylamine, 2-ethylhexylamine, 2-aminoethanol, 1-amino-2-propanol, 2-amino-1-propanol, and 2-aminoethanethiol; and diamines such as ethylenediamine, N,N-dimethylethylenediamine, N,N'-dimethylethylenediamine, N,N-diethylethylenediamine, N,N'-diethylethylenediamine, N-ethylethylenediamine, diethylenetriamine, 1,2-diaminopropane, 1,3-diaminopropane, 2-(2-aminoethylamino)ethanol, N-isopropylethylenediamine, N-isopropyl-1,3-diaminopropane, triethylenetetramine, N,N'-bis(2-hydroxyethyl)ethylenediamine, 2,2-dimethyl-1,3-propanediamine, 2-methyl-2,3-propanediamine, 1,2-diamino-2-methylpropane, 3,3'-diamino-N-methyldipropylamine, 2,3-dimethyl-2,3-butanediamine, 3,3'-diaminodipropylamine, N,N-bis(2-aminoethyl)-1,3-propanediamine, triethylenetetramine, 2,2'-oxybis(ethylamine), tetramethylenediamine, 1,4-diaminobutane, 2,2'-thiobis(ethylamine), 1,5-diaminopentane, 2-methyl-1,5-diaminopentane, 1,6-diaminoheptane, 1,7 -diaminopentane, 1,10-diaminodecane, 1,11-diaminoundecane, 1,12-diaminododecane, N,N'-bis(3-aminopropyl)ethylenediamine, diethylene glycol bis(3-aminopropyl)ether, 1,14-diamino-3,6,9,12-tetraoxatetradecane, bis(aminomethyl)cyclohexane, 1,2-cyclohexanediamine, 1,3-cyclohexanediamine, 1,4-cyclohexanediamine, bis(aminomethyl)norbornane, 1,4-bis(aminomethyl)cyclohexane, and 1,2-bis(2-aminoethoxy)ethane. Among these, a compound having two or more amino groups is preferable, and a diamine having 2 carbon atoms between amino groups is more preferable.

Examples of the aromatic amine include aralkyl monoamines such as benzylamine, p-methoxycarbonylbenzylamine, p-ethoxycarbonylphenylbenzyl, p-methylbenzylamine, m-methylbenzylamine, and o-methoxybenzylamine; aryl monoamines such as aniline, p-methoxycarbonylaniline, p-ethoxycarbonylaniline, p-methoxyaniline, 1-naphthylamine, 2-naphthylamine, anthranilamine, 1-aminopyrene, 4-biphenylylamine, o-phenylaniline, 4-amino-p-terphenyl, and 2-aminofluorene; and aryldiamines such as 1,2-phenylenediane, 1,3-phenylenediamine, 1,4-phenylenediamine, 3-nitro-1,2-phenylenediamine, 4-nitro-1,2-phenylenediamine, 3-methyl-1,2-phenylenediamine, 4-methyl-1,2-phenylenediamine, 1,2,4-benzenetriamine, 3,4-dimethyl-1,2-phenylenediamine, 4,5-dimethyl-1,2-phenylenediamine, 3-fluoro-1,2-phenylenediamine, 4-fluoro-1,2-phenylenediamine, 3,4-difluoro-1,2-phenylenediamine, 3,5-difluoro-1,2-phenylenediamine, 4,5-difluoro-1,2-phenylenediamine, 3-chloro-1,2-phenylenediamine, 4-chloro-1,2-phenylenediamine, 3,4-dichloro-1,2-phenylenediamine, 3,5-dichloro-1,2-phenylenediamine, 4,5-dichloro-1,2-phenylenediamine, 3-bromo-1,2-phenylenediamine, 4-bromo-1,2-phenylenediamine, 3,4-dibromo-1,2-phenylenediamine, 3,5-dibromo-1,2-phenylenediamine, 4,5-dibromo-1,2-phenylenediamine, 2,3-naphthalenediamine, benzidine, 3,3' -diaminobenzidine, 3,4-diaminobenzoic acid, methyl 3, 4-diaminobenzoate, ethyl 3,4-diaminobenzoate, 4-(4-aminophenoxy)-1,2-benzenediamine, 3,4-diaminobenzophenone, and 5,6-diamino-1,3-dihydro-2H-benzimidazole-2-one.

Examples of the heterocyclic amine include barbituric acid, aziridine, azetidine, pyrrolidine, piperidine, piperazine, azepane, pyridine, pyridazine, pyrimidine, pyrazine, imidazole, benzimidazole, pyrazole, oxazole, isoxazole, benzoxazole, thiazole, isothiazole, benzothiazole, triazine, azepine, diazepine, benzodiazepine, pyrrole, imidazoline, morpholine, thiazine, indole, isoindole, purine, quinoline, isoquinoline, quinoxaline, pteridine, acridine, carbazole, cinnoline, benzo-C-cinnoline, porphyrin, chlorine, choline, triaminotriazine, trichlorotriazine, and derivatives thereof.

Examples of the amino acid include cysteine, glycine, alanine, valine, phenylalanine, threonine, lysine, asparagine, tryptophan, serine, glutamic acid, aspartic acid, ornithine, thyroxine, cystine, leucine, isoleucine, proline, tyrosine, asparagine, glutamine, histidine, methionine, and threonine. Examples of the amino group-containing polyalkylene glycol include amino group-containing polyethylene glycol and amino group-containing polypropylene glycol. When the amino acid has an optical isomer, the amino acid may be a D-form, an L-form, or a racemic form.

The amount of the amine used is preferably 10 to 300 parts by weight, and more preferably 20 to 150 parts by weight per 100 parts by weight of the carbon source in terms of a nitrogen introduction efficiency.

As the raw material, an organic compound other than the carbon source and the nitrogen source may be further used. Such an organic compound is not particularly limited as long as it does not hinder the effect of the present invention.

The solvent is not particularly limited as long as it can dissolve the raw materials to be used. Examples of such a solvent include water, dimethylsulfoxide, dimethylformamide, dimethylacetamide, N-methyl-2-pyrrolidone (NMP), hexamethylphosphoric triamide, acetonitrile, acetone, alcohols (methanol, ethanol, 1-propanol, and 2-propanol and the like), glycols (ethylene glycol and triethylene glycol and the like), cellosolves (ethyl cellosolve and methyl cellosolve and the like), polyhydric alcohols (glycerol and pentaerythritol and the like), tetrahydrofuran, toluene, ethyl acetate, butyl acetate, benzene, toluene, xylene, pentane, hexane, heptane, chlorobenzene, dichlorobenzene, trichlorobenzene, hexadecane, benzyl alcohol, and oleyl amine. Among these, water is preferable in the present invention. The solvents may be used singly or as a mixture of two or more thereof.

The amount of the solvent used is preferably 100 to 10,000 parts by weight, and more preferably 400 to 2,500 parts by weight per 100 parts by weight of the raw material in terms of obtaining a carbon nanostructure having a uniform particle size.

When the carbon nanostructure is synthesized, an acid catalyst or a surfactant may be further contained as necessary.

The acid catalyst may be a homogeneous acid catalyst or a heterogeneous acid catalyst, but from the viewpoint of improving the quantum yield, a heterogeneous acid catalyst is preferable. Examples of the homogeneous acid catalyst include inorganic acids such as hydrochloric acid, sulfuric acid, nitric acid, and phosphoric acid, and organic acids such as sulfonic acid and p-toluenesulfonic acid. Meanwhile, the heterogeneous acid catalyst is preferably a solid acid catalyst, and examples thereof include a cationic ion exchange resin, a cationic ion exchange membrane, and a solid acid catalyst described in Nature 438, p. 178 (2005). Commercially available products may be used as the solid acid catalyst. Examples thereof include ion exchange resins AMBERLYST (registered trademark) 15, 16, 31, and 35 and the like and AMBERLITE (registered trademark) IR 120B, IR 124, 200 CT and 252 and the like manufactured by Rohm and Haas Company, an ion exchange membrane NAFION (registered trademark) manufactured by E.I. DuPont de Nemours and Co., and inorganic solid acid catalysts such as zeolite and polyphosphoric acid. The acid catalysts may be used singly or in combination of two or more kinds thereof.

When the homogeneous acid catalyst is used, the homogeneous acid catalyst is usually added in an amount of preferably 0.01 to 10 parts by weight, more preferably 0.1 to 5 parts by weight, and still more preferably 0.5 to 1 part by weight per 100 parts by weight of the raw material.

The heterogeneous acid catalyst is preferably a porous body having pores which are capable of enclosing the prepared carbon nanostructure. By the size of the pores, the particle size or disk size of the carbon nanostructure to be prepared can be controlled. In general, it is preferable to produce a carbon quantum dot having a particle size (disk size) of up to 20 nm using a solid acid catalyst of a porous body having a pore diameter of up to 20 nm.

When the heterogeneous acid catalyst is used, the homogeneous acid catalyst is added in an amount of preferably about 0.1 to 100 parts by weight, more preferably 1.0 to 50 parts by weight, and still more preferably 5.0 to 10 parts by weight per 100 parts by weight of the raw material.

Examples of the surfactant include cationic surfactants, anionic surfactants, and nonionic surfactants.

Examples of the cationic surfactant include cetyltrimethylammonium bromide and cetyltrimethylammonium chloride. Examples of the anionic surfactant include sodium dodecyl sulfate and sodium dodecylbenzene sulfonate. Examples of the nonionic surfactant include polyethylene glycol and polypropylene glycol. These surfactants may be used singly or in combination of two or more kinds thereof.

In terms of the dispersibility of the raw material and a critical micelle concentration under synthesis conditions, the amount of the surfactant used is preferably 10 to 2,000 parts by weight, and more preferably 50 to 500 parts by weight per 100 parts by weight of the raw material.

When the carbon nanostructure is synthesized, the components may be mixed in any order. The synthesis may be performed in a continuous or batch mode. In the present invention, the continuous synthesis can be suitably employed because a large amount of carbon nanostructures having a uniform particle size can be continuously and efficiently produced.

As the continuous synthesis, for example, a flow reactor can be suitably employed. As the flow reactor, a known apparatus can be used, and examples thereof include a flow type high temperature reaction system Phoenix Flow Reactor manufactured by Thales Nanotechnology Inc. By using the flow reactor, a reaction (solvothermal synthesis, hydrothermal synthesis) under pressure at high temperature can be continuously and efficiently performed.

A reaction temperature can be appropriately adjusted according to conditions such as the type of a solvent used in a raw material solution, and is not particularly limited, but is preferably about 100 to 450°C, more preferably 150 to 400°C, and still more preferably 250 to 350°C from the viewpoint of efficiently performing the reaction. If the reaction temperature is too high, carbides insoluble in the reaction solvent may be formed.

A reaction time (residence time) is preferably 1 to 30 minutes, more preferably 1.5 to 20 minutes, and still more preferably 2 to 16 minutes, from the viewpoint of causing the reaction to completely proceed and suppressing the formation of the carbides insoluble in the reaction solvent.

When the batch synthesis is employed, heating may be performed under normal pressure (atmospheric pressure) or under pressure (solvothermal synthesis, hydrothermal synthesis).

When the reaction is performed at normal pressure, the reaction temperature depends on the boiling point of the solvent to be used, but is usually preferably about 40 to 250°C, more preferably 60 to 200°C, and still more preferably 100 to 150°C. Heating is usually performed in a water bath or an oil bath, but microwave heating is also possible. Thus, for example, when water is used as the solvent, a product can be obtained in a shorter time by microwave heating than by heating in a water bath or an oil bath.

When the reaction is performed at normal pressure, the reaction time is preferably about 1 minute to 240 hours, more preferably about 10 minutes to 48 hours, and still more preferably about 12 to 30 hours.

When pressure is applied, for example, an autoclave can be suitably used. By using the autoclave, the reaction temperature can be raised to a temperature equal to or higher than the boiling point at normal pressure. For example, even when water is used as the solvent, a reaction temperature of about 200°C can be easily achieved by performing the reaction using an autoclave.

The reaction temperature depends on the boiling point of the solvent to be used as in the case of performing the reaction at normal pressure, but is usually preferably about 100 to 450°C, more preferably 150 to 400°C, and still more preferably 250 to 350°C. The reaction time is preferably about 30 seconds to 24 hours, more preferably about 1 minute to 1 hour, and still more preferably about 2 minutes to 10 minutes.

The applied pressure is not particularly limited as long as the desired reaction temperature can be achieved, but it is preferably about 200 kPa to 20.0 MPa, and more preferably about 500 kPa to 15.0 MPa.

When the solid acid catalyst is used in the batch synthesis, it is preferable to perform the reaction under stirring, with better results being obtained by increasing the stirring rate within a range that does not break up the solid catalyst. The stirring rate is preferably about 10 to 500 rpm, and more preferably about 50 to 300 rpm.

The average particle size of the carbon nanostructure obtained by each of the above methods is preferably 20 nm or less, more preferably 15 nm or less, and still more preferably 10 nm or less. The lower limit of the particle size is not particularly limited, but is usually 1 nm or more. If the particle size is within the above range, the carbon nanostructure is not aggregated in the solvent, whereby aggregates are not formed even during the preparation or coating of an electrode-forming composition (electrode slurry or the like). Since the particle size of the carbon nanostructure is sufficiently smaller than the size of the active material, the coating property of the composition on the active material is excellent.

The obtained product can be purified by removing low-molecular-weight impurities by dialysis or ultrafiltration or the like, and then removing high-molecular-weight impurities by centrifugation or the like. The pore size of the dialysis membrane or ultrafiltration membrane and the centrifugal force during centrifugation may be appropriately set according to the molecular weights of the substances to be removed.

Column purification may be performed for purification to a higher degree of purity. The column packing in this case may be a normal-phase packing or a reverse-phase packing. As the normal-phase packing, silica particles and alumina particles and the like can be used. Meanwhile, as the reverse-phase packing, silica particles surface-modified with long-chain alkyl groups, and the like can be used. In order to shorten the time, pressure may be applied during column purification.

When the battery material is prepared using the carbon nanostructure, the carbon nanostructure may be used in the state of a solution after the reaction, or may be used after the solvent is removed to isolate the battery material. When a solvent different from the solvent used in the synthesis of the carbon nanostructure is used in the preparation of the battery material, the solvent may be substituted to obtain a desired solvent system.

The battery material of the present invention can be used for formation of an undercoat layer and an active material layer of an electrode, and preparation of an electrolyte, and the like. In particular, the battery material can be suitably used as a material for forming the active material layer of the electrode.

When the battery material is used as the material for forming the active material layer, it is preferable to combine the following active material, conductive additive, binder, and solvent (dispersion medium) as necessary with the carbon nanostructure.

In the battery material, the compounding amount of the carbon nanostructure varies depending on required electrical and thermal characteristics, viscosity of the material, and production cost, and the like, but is preferably 0.01 to 1.0 wt%, more preferably 0.01 to 0.75 wt%, and still more preferably 0.05 to 0.5 wt% in the solid content. By setting the compounding amount of the carbon nanostructure within the above range, a battery having excellent rate characteristics and cycle characteristics can be obtained.

The solid content referred to herein means components other than the solvent contained in the battery material of the present invention.

As the active material, various active materials conventionally used for an electrode for an energy storage device such as a secondary battery can be used, and examples thereof include a metal, a metalloid, a metal alloy, a metal oxide, a metalloid oxide, a metal phosphate, a metal sulfide, and a metal nitride.

Specific examples of the active material include the following.

Examples of the metal active material include Al, Sn, and Zn.

Examples of the semimetal active material include Si, Ge, and As.

Examples of the metal alloy active material include Li-Al-based alloys, Li-Mg-based alloys, Li-Al-Ni-based alloys, Na-Hg-based alloys, and Na-Zn-based alloys.

Examples of the metal oxide active material include AlOₓ, SnOₓ, SbOₓ, BiOₓ, PbOₓ, ZnOₓ, CdOₓ, InOₓ, TiOₓ, and GaOₓ (provided that 0 < x ≤ 2), V₂O₆, V₆O₁₃, MnO₂, LiCoO₂, LiMnO₂, LiMn₂O₄, LiMo₂O₄, LiV₃O₈, LiNiO₂, Li_{z}Ni_{y}M_{1-y}O₂ (provided that M represents at least one metal element selected from Co, Mn, Ti, Cr, V, Al, Sn, Pb, and Zn, 0.05 ≤ z ≤ 1.10, 0.5 ≤ y ≤ 1.0.), ternary active materials (Li(NiₐCo_{b}Mn_{c})O₂ (provided that 0 < a < 1, 0 < b < 1, 0 < c < 1, a + b + c = 1)), tin silicon oxides (SnSiO₃), lithium bismuth oxides (Li₃BiO₄), lithium zinc oxides (Li₂ZnO₂), and lithium titanium oxides (Li₄Ti₅O₁₂).

Examples of the metalloid oxide active material include SiOₓ, GeOₓ, and AsOₓ (provided that 0 < x ≤ 2).

Examples of the metal phosphate active material include LiFePO₄.

Examples of the metal sulfide active material include FeS₂, TiS₂, MoS₂, Li₂S, lithium iron sulfide (LiₓFeS₂ (provided that 0 < x ≤ 3)), and lithium copper sulfide (LixCuS (provided that 0 < x ≤ 3)).

Examples of the metal nitride active material include LiₓM_{y}N (provided that M = Co, Ni, Cu, 0 ≤ x ≤ 3, 0 ≤ y ≤ 0.5, x and y do not become 0 at the same time) and lithium iron nitride (Li₃FeN₄).

In the present invention, among these, FeS₂, TiS₂, MoS₂, LiFePO₄, V₂O₆, V₆O₁₃, MnO₂, LiCoO₂, LiMnO₂, LiMn₂O₄, LiMo₂O₄, LiV₃O₈, LiNiO₂, Li_{z}Ni_{y}M_{1-y}O₂ (provided that M represents at least one metal element selected from Co, Mn, Ti, Cr, V, Al, Sn, Pb, and Zn, 0.05 ≤ z ≤ 1.10, 0.5 ≤ y ≤ 1.0.), Li(NiₐCo_{b}Mn_{c})O₂ (provided that 0 < a < 1, 0 < b < 1, 0 < c < 1, a + b + c = 1), Li₄Ti₅O₁₂, Si, SiOₓ, AlOₓ, SnOₓ, SbOₓ, BiOₓ, GeOₓ, AsOₓ, PbOₓ, ZnOₓ, CdOₓ, InOₓ, TiOₓ, and GaOₓ (provided that 0 < x ≤ 2) are preferable, and TiOₓ (provided that 0 < x ≤ 2) is more preferable.

Furthermore, Li(NiₐCo_{b}Mn_{c})O₂ more preferably satisfies 1/3 ≤ a < 1, 0 < b ≤ 1/3, 0 < c ≤ 1/3, and a + b + c = 1.

The Li(NiₐCo_{b}Mn_{c})O₂ can also be obtained as a commercially available product, and examples of such a commercially available product include NCM 111 (manufactured by Beijing Easping Material Technology manufactured by Toshima Manufacturing Co., Ltd., a = 1/3, b = 1/3, c = 1/3), NCM 523 (manufactured by Beijing Easping Material Technology manufactured by JIANGSU Easping Material Technology, a = 0.5, b = 0.2, c = 0.3), NCM 622 (manufactured by Beijing Easping Material Technology, a = 0.6, b = 0.2, c = 0.2), and NCM 811 (manufactured by Beijing Easping Material Technology, a = 0.8, b = 0.1, c = 0.1).

The compounding amount of the active material varies depending on required electrical and thermal characteristics, viscosity of the composition, and production cost, and the like, but is preferably 80 to 99.8 wt%, more preferably 85 to 98.5 wt%, and still more preferably 90 to 98 wt% in the solid content.

Examples of the conductive additive include carbon materials such as graphite, carbon black, acetylene black, vapor-grown carbon fibers, carbon nanotubes, carbon nanohorns and graphene; and conductive polymers such as polyaniline, polypyrrole, polythiophene, polyacetylene and polyacene. The conductive additive can be used singly or as a mixture of two or more thereof.

The compounding amount of the conductive additive is not particularly limited, but is preferably 0.05 to 9 wt%, more preferably 0.1 to 6 wt%, and still more preferably 0.2 to 3 wt% in the solid content. By setting the compounding amount of the conductive additive within the above range, good electrical conductivity can be obtained.

The binder to be used can be appropriately selected from known materials, and is not particularly limited. Examples of the binder which can be used in the present invention include polyvinylidene fluoride (PVdF), polytetrafluoroethylene, a tetrafluoroethylene-hexafluoropropylene copolymer, a vinylidene fluoride-hexafluoropropylene copolymer, a vinylidene fluoride-chlorotrifluoroethylene copolymer, polyvinyl alcohol, polyimide, an ethylene-propylene-diene ternary copolymer, styrene-butadiene rubber, carboxymethyl cellulose, polyacrylic acid, polyaniline, polyvinyl pyrrolidone, tetrafluoroethylene, polyethylene, and polypropylene. These can be used singly or in combination of two or more kinds thereof.

The compounding amount of the binder is not particularly limited, but is preferably 0.14 to 10 wt%, more preferably 0.5 to 7 wt%, and still more preferably 1 to 5 wt% in the solid content. By setting the compounding amount of the binder within the above range, good adhesiveness to a current collecting substrate can be obtained without the capacity being lowered.

The binder to be used may be dissolved in an appropriate solvent to be described later in advance before mixing, as necessary.

The solvent is not particularly limited as long as it can disperse or dissolve the raw materials to be used. Examples of such a solvent include the same solvents as those exemplified in the description of the carbon nanostructure, and more suitable specific examples include water, NMP, dimethyl sulfoxide, ethylene carbonate, propylene carbonate, dimethyl carbonate, diethyl carbonate, methyl ethyl carbonate, γ-butyrolactone, tetrahydrofuran, dioxolane, sulfolane, dimethylformamide, and dimethylacetamide. These solvents may be appropriately selected according to the raw materials to be used, but NMP is suitable when a water-insoluble binder such as PVdF is used. The solvents may be used singly or as a mixture of two or more thereof.

When a battery material for forming an active material is prepared, a preparation method thereof is not particularly limited, and the battery material may be prepared by compounding components in any order.

In the carbon nanostructure, when the solvent used in the synthesis is the same as or a solvent miscible with the solvent exemplified above, the obtained reaction liquid may be used as it is. Meanwhile, when the solvent used for the synthesis of the carbon nanostructure is a solvent which is not miscible with the solvent exemplified above, it is preferable to use a liquid isolated by removing the solvent from the obtained reaction liquid or a liquid substituted with an appropriate solvent. In particular, when water is used as a solvent in the synthesis of the carbon nanostructure, it is preferable to replace the solvent with the organic solvent.

Furthermore, in the present invention, an active material-carbon nanostructure composite can be prepared by preparing a solution or dispersion containing the active material and the carbon nanostructure before mixing the respective components, and then removing the solvent. By using this composite in the battery material of the present invention, a battery having excellent rate characteristics and cycle characteristics can be obtained.

The electrode of the present invention includes an active material layer (thin film) made of the battery material described above on a substrate which is a current collector, or is obtained by thinning the battery material alone.

When the active material layer is formed on a substrate, examples of a method for forming the active material layer include a method in which an electrode-forming composition prepared without using a solvent is pressure-molded on a substrate (dry method), or a method in which an electrode-forming composition is prepared using a solvent, applied to a current collector, and dried (wet method). These methods are not particularly limited, and various conventionally known methods can be used. Examples of the wet method include various printing methods such as offset printing and screen printing, a doctor blade method, a dip coating method, a spin coating method, a bar coating method, a slit coating method, and an inkjet method.

Examples of the substrate used for the electrode include metal substrates composed of platinum, gold, iron, stainless steel, copper, aluminum, and lithium and the like, alloy substrates composed of any combination of these metals, oxide substrates composed of Indium-tin oxide (ITO), indium-zinc oxide (IZO), and antimony-tin oxide (ATO) and the like, or carbon substrates composed of glassy carbon, pyrolytic graphite, and carbon felt and the like.

In the case of thinning the battery material alone, a thin film may be formed on a substrate which can be peeled off after the thin film is formed by appropriately using the wet method and dry method described above, and a method for thinly extending the battery material on the substrate using a glass rod or the like can also be adopted. As the substrate, a substrate having no adhesiveness to a thin film such as a glass plate can be used, and even a substrate having adhesiveness to a thin film can be used as long as the substrate has a surface subjected to a treatment for enabling the peeling of the thin film (bonding of release paper and formation of a release layer, and the like).

The film thickness of the active material layer (thin film) is not particularly limited, but is preferably about 0.01 to 1,000 µm, and more preferably about 1 to 100 µm. When the thin film is used alone as the electrode, the film thickness thereof is preferably 10 µm or more.

In order to further suppress the elution of the active material contained in the electrode, the active material layer (thin film) may further contain a polyalkylene oxide and an ion conductive salt, or the electrode may be covered with a protective film. The protective film preferably contains a polyalkylene oxide and an ion conductive salt.

The polyalkylene oxide is not particularly limited, but polyethylene oxide and polypropylene oxide and the like are preferable.

The numerical average molecular weight of the polyalkylene oxide is preferably 300,000 to 900,000, and more preferably 500,000 to 700,000. The numerical average molecular weight is a value measured in terms of polystyrene by gel permeation chromatography (GPC) using tetrahydrofuran as a solvent.

Examples of the ion conductive salt include lithium bis(trifluoromethanesulfonyl)imide (LiTFSI), lithium bis(pentafluoroethanesulfonyl)imide (LiBETI), lithium trifluoromethanesulfonate (LiCF₃SO₃), lithium perchlorate (LiClO₄), lithium tetrafluoroborate (LiBF₄), and lithium hexafluorophosphate (LiPF6). The ion conductive salt is preferably contained in an amount of 5 to 50 parts by weight per 100 parts by weight of the polyalkylene oxide.

The protective film can be formed, for example, by applying a composition containing a polyalkylene oxide, an ion conductive salt, and a solvent on a substrate on which the active material layer (thin film) is formed by a method such as a dip method, and drying the composition at 40 to 60°C for 30 to 120 minutes.

As the solvent, acetonitrile and dichloromethane and the like are preferable.

The film thickness of the protective film is not particularly limited, but is preferably about 10 to 1,000 µm, and more preferably about 50 to 500 µm.

The secondary battery of the present invention includes the above-described electrodes. More specifically, the secondary battery includes at least a pair of positive and negative electrodes, a separator interposed between the respective electrodes, and an electrolyte. At least one of the positive and negative electrodes includes the above-described electrodes. Other constituent members of the battery element to be used may be appropriately selected from conventionally known constituent members.

Examples of the material used for the separator include porous polyolefins, polyamides, and polyesters.

As the electrolyte, an electrolytic solution composed of an electrolyte salt, which is a main body of ion conduction, and a solvent and the like can be suitably used from the viewpoint of being capable of easily exhibiting a practically sufficient performance.

Examples of the electrolyte salt include lithium salts such as LiPF6, LiBF₄, LiN(C₂F₅SO₂)₂, LiAsF₆, LiSbF6, LiAlF₄, LiGaF₄, LiInF₄, LiClO₄, LiN(CF₃SO₂)₂, LiCF₃SO₃, LiSiF6, and LiN (CF₃SO₂) (C₄F₉SO₂), metal iodides such as LiI, NaI, KI, CsI, and CaI₂, iodide salts of quaternary imidazolium compounds, iodide salts and perchlorate salts of tetraalkylammonium compounds, and metal bromides such as LiBr, NaBr, KBr, CsBr, and CaBr₂. These electrolyte salts can be used alone or as a mixture of two or more thereof.

The solvent is not particularly limited as long as it does not cause corrosion or decomposition of the substance constituting the battery to deteriorate the performance, and dissolves the electrolyte salt. For example, cyclic esters such as ethylene carbonate, propylene carbonate, butylene carbonate, and γ-butyrolactone, ethers such as tetrahydrofuran and dimethoxyethane, and chain esters such as dimethyl carbonate, diethyl carbonate, and ethyl methyl carbonate, and the like are used as the nonaqueous solvent. These solvents can be used alone or as a mixture of two or more thereof.

The electrode may be pressed as necessary. At this time, the pressing pressure is preferably 1 kN/cm or more. As the pressing method, a generally employed method can be used, but a die pressing method or a roll pressing method is particularly preferable. The pressing pressure is not particularly limited, but is preferably 2 kN/cm or more, and more preferably 3 kN/cm or more. The upper limit of the pressing pressure is preferably about 40 kN/cm, and more preferably about 30 kN/cm.

The battery produced using the battery material of the present invention has more excellent rate characteristics and cycle characteristics than those of a general secondary battery.

The form of the secondary battery and the type of the electrolyte are not particularly limited. Any form of a lithium ion battery, a nickel hydrogen battery, a manganese battery, and an air battery and the like may be used, but a lithium ion battery is suitable. The lamination method and the production method are also not particularly limited.

The form of the cell is not also particularly limited, and cells of various known forms such as a cylindrical cell, a flat wound prismatic cell, a stacked prismatic cell, a coin cell, a flat wound laminate cell, and a stacked laminate cell may be adopted.

In the case of application to the coin cell, the above-mentioned electrode of the present invention to be used may be punched into a predetermined disk shape.

For example, a lithium ion secondary battery can be prepared by installing one electrode on a coin cell cap to which a washer and a spacer had been welded, stacking a separator impregnated with an electrolytic solution and having the same shape thereon, further stacking the electrode of the present invention from above with an active material layer facing down, and placing a case and a gasket, followed by sealing with a coin cell crimper.

### EXAMPLES

Hereinafter, the present invention is described in more detail with reference to Examples and Comparative Examples, but the present invention is not limited to the following Examples. Measurement apparatuses used in Examples are as follows.

### [Flow Reactor]

Apparatus: Flow high temperature reaction system Phoenix Flow Reactor manufactured by Thales Nanotechnology Inc.

### [Measurement of Fluorescence Spectrum]

Apparatus: Spectrofluorometer F-7000 manufactured by Hitachi High-Tech Science Corporation

### [Analysis of Absolute Quantum Yield]

Apparatus: Absolute PL quantum yield meter manufactured by Hamamatsu Photonics K.K.

### [Measurement of Conductivity]

Apparatus: Low resistance meter Loresta-GP manufactured by Mitsubishi Chemical Analytech Co., Ltd.

### [Elemental Analysis]

Apparatus: Full automatic elemental analyzer CHNS/O analyzer 2400 manufactured by Perkin-Elmer corporation

The obtained solution was placed in an aluminum cup container, and dried on a hot plate at 150°C to obtain a powder, and the powder was analyzed.

### [Transmission Electron Microscope (TEM)]

Apparatus: H-8000 manufactured by Hitachi, Ltd.

A TEM substrate was immersed in the obtained solution and dried. The resultant was observed at an accelerating voltage of 200 kV and a magnification of 20,000 times. The diameters of 10 particles were measured to determine a number average particle size.

### [Planetary Centrifugal Mixer]

Apparatus: Awatori Rentaro ARE-310 manufactured by Thinky

### [Roll Pressing Machine]

Apparatus: Pressurizing/heating roll pressing machine SA-602 manufactured by Takumi Giken Corporation

### [Coin Cell Crimper]

Apparatus: Manual coin crimper CR 2032 manufactured by Hohsen Corporation

### [Micrometer]

Apparatus: IR 54 manufactured by Mitutoyo Corporation

### [Charge/Discharge Measurement Apparatus]

Apparatus: TOSCAT 3100 manufactured by Toyo System Co., Ltd.

### [1] Production of Carbon Nanostructure (Carbon Quantum Dot)

### (1) Preparation of Aqueous Solution of Carbon Nanostructure

### [Example 1-1]

20.0 g (0.1 mol) of citric acid (manufactured by FUJIFILM Wako Pure Chemical Corporation) was used as a carbon source, and 12.5 g (0.2 mol) of ethylenediamine (manufactured by Tokyo Kasei Kogyo Co., Ltd.) as a nitrogen source was dissolved in 292 g of water to prepare an aqueous solution having a raw material concentration of 10 wt%. Using a flow reactor, the aqueous solution was continuously synthesized at a flow rate of 4 mL/min. (residence time: 2 minutes) and a temperature of 300°C to obtain an aqueous solution A1 of a carbon nanostructure.

As a result of elemental analysis, a carbon amount was 38.8 wt%; a hydrogen amount was 7.1 wt%; and a nitrogen amount was 17.0 wt%. The particle size was 5 nm.

Water was evaporated under reduced pressure from the obtained aqueous solution A1 to obtain a reddish brown solid D1. The solid D1 was placed in a high-resistance probe unit for powder, and pressurized to 20 kN with a low resistance meter Loresta-GP to measure conductivity. As a result, the conductivity was equal to or less than the detection limit.

### [Example 1-2]

An aqueous solution A2 was prepared in the same manner as in Example 1-1 except that a reaction temperature was changed to 340°C.

As a result of elemental analysis, a carbon amount was 46.0 wt%; a hydrogen amount was 7.9 wt%; and a nitrogen amount was 17.6 wt%. The particle size was 5 nm.

In the same manner as in Example 1-1, conductivity of a reddish brown solid D2 obtained by evaporating water from the obtained aqueous solution A2 under reduced pressure was measured and found to be equal to or less than the detection limit.

### [Example 1-3]

An aqueous solution A3 was prepared in the same manner as in Example 1-1 except that ethylenediamine as a raw material was changed to N-ethylethylenediamine.

As a result of elemental analysis, a carbon amount was 57.5 wt%, a hydrogen amount was 7.6 wt%; and a nitrogen amount was 16.7 wt%. The particle size was 14 nm.

In the same manner as in Example 1-1, conductivity of a reddish brown solid D3 obtained by evaporating water from the obtained aqueous solution A3 under reduced pressure was measured and found to be equal to or less than the detection limit.

### [Example 1-4]

An aqueous solution A4 was prepared in the same manner as in Example 1-1 except that ethylenediamine as a raw material was changed to 2-(2-aminoethylamino)ethanol.

As a result of elemental analysis, a carbon amount was 53.3 wt%; a hydrogen amount was 7.0 wt%; and a nitrogen amount was 16.0 wt%. The particle size was 7 nm.

In the same manner as in Example 1-1, conductivity of a reddish brown solid D4 obtained by evaporating water from the obtained aqueous solution A4 under reduced pressure was measured and found to be equal to or less than the detection limit.

### [Comparative Example 1-1]

An aqueous solution A5 was prepared in the same manner as in Example 1-1 except that a raw material was changed to only citric acid.

As a result of elemental analysis, a carbon amount was 44.5 wt%; a hydrogen amount was 4.5 wt%; and a nitrogen amount was 0.0 wt%. The particle size was 10 nm.

In the same manner as in Example 1-1, conductivity of a reddish brown solid D5 obtained by evaporating water from the obtained aqueous solution A5 under reduced pressure was measured and found to be equal to or less than the detection limit.

In the same manner as in Example 1-1, conductivity of a reddish brown solid D3 obtained by evaporating water from the obtained aqueous solution A3 under reduced pressure was measured and found to be equal to or less than the detection limit.

### [Comparative Example 1-2]

An aqueous solution A6 was prepared in the same manner as in Example 1-1 except that only glucose was used as a raw material and a reaction temperature was changed to 250°C.

As a result of elemental analysis, a carbon amount was 41.9 wt%; a hydrogen amount was 6.6 wt%; and a nitrogen amount was 0.0 wt%. The particle size was 200 nm.

In the same manner as in Example 1-1, conductivity of a reddish brown solid D6 obtained by evaporating water from the obtained aqueous solution A6 under reduced pressure was measured and found to be equal to or less than the detection limit.

### (2) Measurement of Fluorescence Spectrum and Quantum Yield

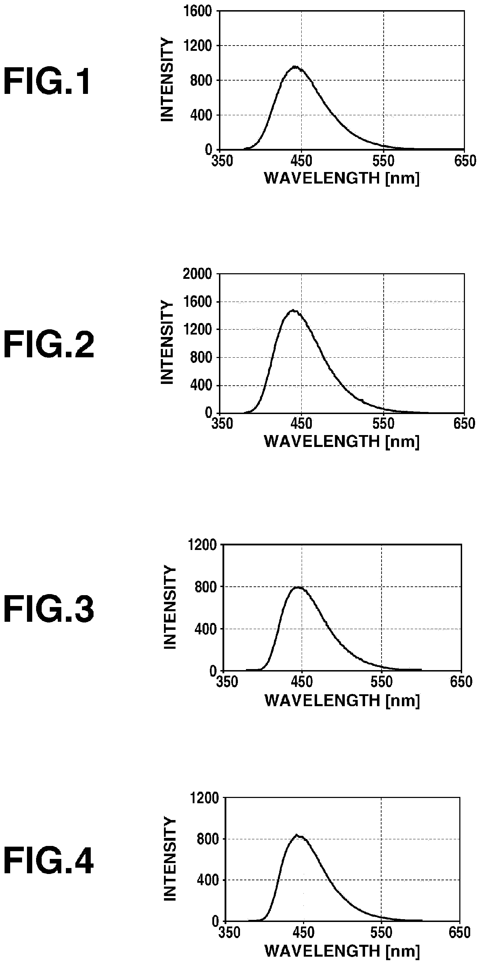

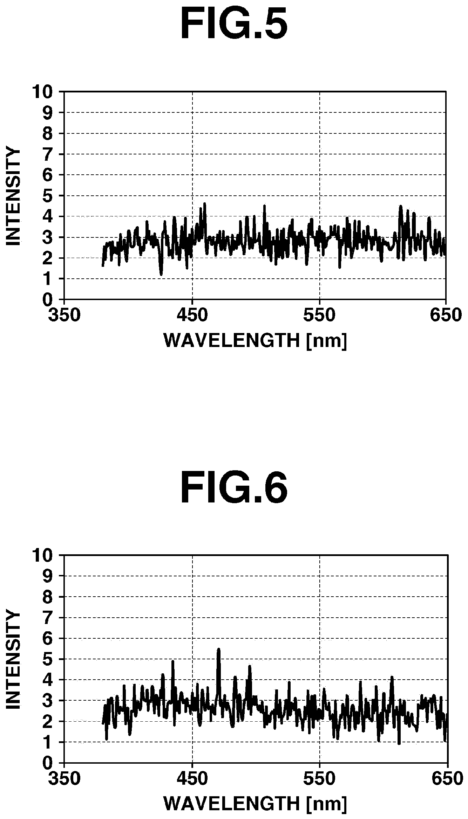

Each of the aqueous solutions A1 to A6 obtained in Examples 1-1 to 1-4 and Comparative Examples 1-1 and 1-2 was diluted 1,000 times with water, and a fluorescence spectrum and absolute quantum yield thereof were measured. During the measurement, an excitation wavelength was fixed at 360 nm. The results are shown in Table 1. The fluorescence spectra obtained by the measurement are shown in FIGS. 1 to 6.

**[Table 1]**

| | Maximum fluorescence wavelength^{∗} [nm] | Absolute quantum yield [%] |
|---|---|---|
| Example 1-1 | 440 | 65.0 |
| Example 1-2 | 442 | 63.8 |
| Example 1-3 | 441 | 75.7 |
| Example 1-4 | 445 | 78.3 |
| Comparative Example 1-1 | 384 | 0.6 |
| Comparative Example 1-2 | 384 | 0.9 |

| | | |
|---|---|---|
| ^{∗}Maximum fluorescence wavelengths in Table are values automatically detected by a measurement apparatus. | | |

Carbon nanostructures (carbon quantum dots) synthesized in Examples 1-1 to 1-4 had a maximum fluorescence wavelength in the vicinity of 440 nm, and a quantum yield higher than that of Comparative Examples.

### (3) Solvent Substitution

### [Example 2-1]

An appropriate amount of NMP was added to the aqueous solution A1 obtained in Example 1-1, and water was evaporated under reduced pressure in a rotary evaporator. The obtained solution was passed through a 1.0 µm filter to remove aggregates, thereby obtaining an NMP solution B1. The solid content was measured as a dry residue after drying at 150°C for 2 hours and found to be 6.9 wt%.

### [Example 2-2]

An NMP solution B2 was obtained in the same manner as in Example 2-1 except that the aqueous solution A2 obtained in Example 1-2 was used instead of the aqueous solution A1. The solid content was 6.2 wt%.

### [Example 2-3]

An NMP solution B3 was obtained in the same manner as in Example 2-1 except that the aqueous solution A3 obtained in Example 1-3 was used instead of the aqueous solution A1. The solid content was 6.2 wt%.

### [Example 2-4]

An NMP solution B4 was obtained in the same manner as in Example 2-1 except that the aqueous solution A4 obtained in Example 1-4 was used instead of the aqueous solution A1. The solid content was 6.2 wt%.

### [Comparative Example 2-1]

An NMP solution B5 was obtained in the same manner as in Example 2-1 except that the aqueous solution A5 obtained in Comparative Example 1-1 was used instead of the aqueous solution A1. The solid content was 5.4 wt%.

### [Comparative Example 2-2]

An NMP solution B6 was obtained in the same manner as in Example 2-1 except that the aqueous solution A6 obtained in Comparative Example 1-2 was used instead of the aqueous solution A1. The solid content was 12.6 wt%.

### [2] Production and Evaluation of Lithium Ion Battery

### (1) Production of Electrode

### [Example 3-1]

2.781 g of a ternary positive active material Li(Ni_{0.5}Co_{0.2}Mn_{0.3})O₂ (NCM 523-5Y manufactured by Beijing Easping Material Technology), 0.052 g of acetylene black (manufactured by Denki Kagaku Kogyo K.K.) as a conductive additive, 0.042 g of the solution B1 prepared in Example 2-1, and 1.28 g of an NMP solution of PVdF (# 7300 manufactured by Kureha Corporation) (solid content concentration: 5 wt%) as a binder were mixed (solid content mass ratio: 95.9 : 1.8 : 0.1 : 2.2), and 0.859 g of NMP was further mixed with the mixture so that the total solid content concentration was 58 wt%. This was mixed with a planetary centrifugal mixer (3 times at 2,000 rpm for 10 minutes) to prepare an electrode-forming slurry. This was uniformly spread on an aluminum foil (1085 manufactured by UACJ, substrate thickness: 15 µm) by a doctor blade method (wet film thickness: 100 µm), then dried at 80°C for 30 minutes, and then dried at 120°C for 30 minutes to form an active material layer. This was pressure-bonded by a roll pressing machine to produce an electrode C1 (film thickness: 40 µm).

### [Example 3-2]

2.770 g of a ternary positive active material Li(Ni_{0.5}Co_{0.2}Mn_{0.3})O₂ (NCM 523-5Y manufactured by Beijing Easping Material Technology), 0.052 g of acetylene black (manufactured by Denki Kagaku Kogyo K.K.) as a conductive additive, 0.210 g of the solution B1 prepared in Example 2-1, and 1.28 g of an NMP solution of PVdF (# 7300 manufactured by Kureha Corporation) (solid content concentration: 5 wt%) as a binder were mixed (solid content mass ratio: 95.5 : 1.8 : 0.5 : 2.2), and 0.692 g of NMP was further mixed with the mixture so that the total solid content concentration was 58 wt%. This was mixed with a planetary centrifugal mixer (3 times at 2,000 rpm for 10 minutes) to prepare an electrode-forming slurry. This was uniformly spread on an aluminum foil (1085 manufactured by UACJ, substrate thickness: 15 µm) by a doctor blade method (wet film thickness: 100 µm), then dried at 80°C for 30 minutes, and then dried at 120°C for 30 minutes to form an active material layer. This was pressure-bonded by a roll pressing machine to produce an electrode C2 (film thickness: 40 µm).

### [Example 3-3]

2.770 g of a ternary positive active material Li(Ni_{0.5}Co_{0.2}Mn_{0.3})O₂ (NCM 523-5Y manufactured by Beijing Easping Material Technology), 0.052 g of acetylene black (manufactured by Denki Kagaku Kogyo K.K.) as a conductive additive, 0.233 g of the solution B2 prepared in Example 2-2, and 1.28 g of an NMP solution of PVdF (# 7300 manufactured by Kureha Corporation) (solid content concentration: 5 wt%) as a binder were mixed (solid content mass ratio: 95.5 : 1.8 : 0.5 : 2.2), and 0.669 g of NMP was further mixed with the mixture so that the total solid content concentration was 58 wt%. This was mixed with a planetary centrifugal mixer (3 times at 2,000 rpm for 10 minutes) to prepare an electrode-forming slurry. This was uniformly spread on an aluminum foil (1085 manufactured by UACJ, substrate thickness: 15 µm) by a doctor blade method (wet film thickness: 100 µm), then dried at 80°C for 30 minutes, and then dried at 120°C for 30 minutes to form an active material layer. This was pressure-bonded by a roll pressing machine to produce an electrode C3 (film thickness: 37 µm).

### [Example 3-4]

2.770 g of a ternary positive active material Li(Ni_{0.5}Co_{0.2}Mn_{0.3})O₂ (NCM 523-5Y manufactured by Beijing Easping Material Technology), 0.052 g of acetylene black (manufactured by Denki Kagaku Kogyo K.K.) as a conductive additive, 0.065 g of the solution B3 prepared in Example 2-3, and 1.28 g of an NMP solution of PVdF (# 7300 manufactured by Kureha Corporation) (solid content concentration: 5 wt%) as a binder were mixed (solid content mass ratio: 95.5 : 1.8 : 0.5 : 2.2), and 0.826 g of NMP was further mixed with the mixture so that the total solid content concentration was 58 wt%. This was mixed with a planetary centrifugal mixer (3 times at 2,000 rpm for 10 minutes) to prepare an electrode-forming slurry. This was uniformly spread on an aluminum foil (1085 manufactured by UACJ, substrate thickness: 15 µm) by a doctor blade method (wet film thickness: 100 µm), then dried at 80°C for 30 minutes, and then dried at 120°C for 30 minutes to form an active material layer. This was pressure-bonded by a roll pressing machine to produce an electrode C4 (film thickness: 42 µm).

### [Example 3-5]

2.770 g of a ternary positive active material Li(Ni_{0.5}Co_{0.2}Mn_{0.3})O₂ (NCM 523-5Y manufactured by Beijing Easping Material Technology), 0.052 g of acetylene black (manufactured by Denki Kagaku Kogyo K.K.) as a conductive additive, 0.054 g of the solution B4 prepared in Example 2-4, and 1.28 g of an NMP solution of PVdF (# 7300 manufactured by Kureha Corporation) (solid content concentration: 5 wt%) as a binder were mixed (solid content mass ratio: 95.5 : 1.8 : 0.5 : 2.2), and 0.837 g of NMP was further mixed with the mixture so that the total solid content concentration was 58 wt%. This was mixed with a planetary centrifugal mixer (3 times at 2,000 rpm for 10 minutes) to prepare an electrode-forming slurry. This was uniformly spread on an aluminum foil (1085 manufactured by UACJ, substrate thickness: 15 µm) by a doctor blade method (wet film thickness: 100 µm), then dried at 80°C for 30 minutes, and then dried at 120°C for 30 minutes to form an active material layer. This was pressure-bonded by a roll pressing machine to produce an electrode C5 (film thickness: 42 µm).

### [Comparative Example 3-1]

2.784 g of a ternary positive active material Li(Ni_{0.5}Co_{0.2}Mn_{0.3})O₂ (NCM 523-5Y manufactured by Beijing Easping Material Technology), 0.052 g of acetylene black (manufactured by Denki Kagaku Kogyo K.K.) as a conductive additive, and 1.28 g of an NMP solution of PVdF (# 7300 manufactured by Kureha Corporation) (solid content concentration: 5 wt%) as a binder were mixed (solid content mass ratio: 96 : 1.8 : 2.2), and 0.888 g of NMP was further mixed with the mixture so that the total solid content concentration was 58 wt%. This was mixed with a planetary centrifugal mixer (3 times at 2,000 rpm for 10 minutes) to prepare an electrode-forming slurry. This was uniformly spread on an aluminum foil (1085 manufactured by UACJ, substrate thickness: 15 µm) by a doctor blade method (wet film thickness: 100 µm), then dried at 80°C for 30 minutes, and then dried at 120°C for 30 minutes to form an active material layer. This was pressure-bonded by a roll pressing machine to produce an electrode C6 (film thickness: 40 µm).

### [Comparative Example 3-2]

2.770 g of a ternary positive active materialLi(Ni_{0.5}Co_{0.2}Mn_{0.3})O₂ (NCM 523-5Y manufactured by Beijing Easping Material Technology), 0.052 g of acetylene black (manufactured by Denki Kagaku Kogyo K.K.) as a conductive additive, 0.271 g of the solution B3 prepared in Comparative Example 2-1, and 1.28 g of an NMP solution of PVdF (# 7300 manufactured by Kureha Corporation) (solid content concentration: 5 wt%) as a binder were mixed (solid content mass ratio: 95.5 : 1.8 : 0.5 : 2.2), and 0.635 g of NMP was further mixed with the mixture so that the total solid content concentration was 58 wt%. This was mixed with a planetary centrifugal mixer (3 times at 2,000 rpm for 10 minutes) to prepare an electrode-forming slurry. This was uniformly spread on an aluminum foil (1085 manufactured by UACJ, substrate thickness: 15 µm) by a doctor blade method (wet film thickness: 100 µm), then dried at 80°C for 30 minutes, and then dried at 120°C for 30 minutes to form an active material layer. This was pressure-bonded by a roll pressing machine to produce an electrode C7 (film thickness: 40 µm).

### [Comparative Example 3-3]

2.770 g of a ternary positive active material Li(Ni_{0.5}Co_{0.2}Mn_{0.3})O₂ (NCM 523-5Y manufactured by Beijing Easping Material Technology), 0.052 g of acetylene black (manufactured by Denki Kagaku Kogyo K.K.) as a conductive additive, 0.115 g of the solution B4 prepared in Comparative Example 2-2, and 1.28 g of an NMP solution of PVdF (# 7300 manufactured by Kureha Corporation) (solid content concentration: 5 wt%) as a binder were mixed (solid content mass ratio: 95.5 : 1.8 : 0.5 : 2.2), and 0.787 g of NMP was further mixed with the mixture so that the total solid content concentration was 58 wt%. This was mixed with a planetary centrifugal mixer (3 times at 2,000 rpm for 10 minutes) to prepare an electrode-forming slurry. This was uniformly spread on an aluminum foil (1085 manufactured by UACJ, substrate thickness: 15 µm) by a doctor blade method (wet film thickness: 100 µm), then dried at 80°C for 30 minutes, and then dried at 120°C for 30 minutes to form an active material layer. This was pressure-bonded by a roll pressing machine to produce an electrode C8 (film thickness: 41 µm).

### [Comparative Example 3-4]

2.770 g of a ternary positive active material Li(Ni_{0.5}Co_{0.2}Mn_{0.3})O₂ (NCM 523-5Y manufactured by Beijing Easping Material Technology), 0.052 g of acetylene black (manufactured by Denki Kagaku Kogyo K.K.) as a conductive additive, 0.290 g of an NMP solution of polyvinylpyrrolidone (K 15 manufactured by Tokyo Kasei Kogyo Co., Ltd., molecular weight: 10,000) (solid content concentration: 5 wt%), and 1.28 g of an NMP solution of PVdF (# 7300 manufactured by Kureha Corporation) (solid content concentration: 5 wt%) as a binder were mixed (solid content mass ratio: 95.5 : 1.8 : 0.5 : 2.2), and 0.612 g of NMP was further mixed with the mixture so that the total solid content concentration was 58 wt%. This was mixed with a planetary centrifugal mixer (3 times at 2,000 rpm for 10 minutes) to prepare an electrode-forming slurry. This was uniformly spread on an aluminum foil (1085 manufactured by UACJ, substrate thickness: 15 µm) by a doctor blade method (wet film thickness: 100 µm), then dried at 80°C for 30 minutes, and then dried at 120°C for 30 minutes to form an active material layer. This was pressure-bonded by a roll pressing machine to produce an electrode C9 (film thickness: 44 µm).

### (2) Production of Lithium Ion Battery

### [Example 4-1]

The electrode C1 prepared in Example 3-1 was punched into a disk shape having a diameter of 10 mm, and the mass thereof was measured. Then, the disk-shaped electrode was vacuum-dried at 120°C for 12 hours, and transferred to a glove box filled with argon.

A stack of six lithium foils (manufactured by Honjo Chemical Corporation, thickness: 0.17 mm) punched out to a diameter of 14 mm was set on a 2032 coin cell (Hohsen Corporation) cap to which a washer and a spacer had been welded. One separator (2400 manufactured by Celgard KK) punched out to a diameter of 16 mm which had been impregnated for at least 24 hours with an electrolyte solution (manufactured by Kishida Chemical Co., Ltd.; an ethylene carbonate : diethyl carbonate = 1 : 1 (volume ratio) solution containing 1 mol/L of lithium hexafluorophosphate (LiPF6) as the electrolyte) was stacked thereon. Furthermore, the electrode C1 was then stacked on top with the active material-coated surface facing down. A single drop of electrolyte solution was dropped thereon, and a case and a gasket were then placed thereon, followed by carrying out sealing with a coin cell crimper. The cell was then allowed to stand for 24 hours to obtain a secondary battery for testing.

### [Examples 4-2 to 4-5]

Secondary batteries for testing were prepared in the same manner as in Example 4-1 except that the electrodes C2 to C5 prepared in Examples 3-2 to 3-5 were used instead of the electrode C1.

### [Comparative Examples 4-1 to 4-4]

Secondary batteries for testing were prepared in the same manner as in Example 4-1 except that the electrodes C6 to C9 prepared in Comparative Examples 3-1 to 3-4 were used instead of the electrode C1.

For the lithium ion secondary batteries produced in Examples 4-1 to 4-5 and Comparative Examples 4-1 to 4-4, the physical properties of the electrodes were evaluated under the following conditions using a charge/discharge measurement apparatus. Table 2 shows the ratio of a discharge capacity at a discharge rate during discharge at 0.2 C and 10 C of each of the secondary batteries based on the discharge capacity of Comparative Example 4-1.

### [Measurement Conditions]

- Rate characteristics:
   Current: constant current charge at 0.2 C, constant current discharge at 0.2 C, 0.5 C, 3 C, 5 C, 10 C (the capacity of Li(Ni_{0.5}Co_{0.2}Mn_{0.3})O₂ was set to 160 mAh/g; and the discharge rate for every 2 cycles was increased, and finally, the discharge rate was set to 0.5 C)
- Cut off voltage: 4.20 V to 3.00 V
- Temperature: room temperature

**[Table 2]**

| | Electrode | Material | Preparation conditions | Added amount [wt%] | Discharge capacity ratio at 0.2 C [%] | Discharge capacity ratio at 10 C [%] |
|---|---|---|---|---|---|---|
| Example 4-1 | C1 | Carbon quantum dot | CA:EDA = 1:2 300°C | 0.1 | 99.7 | 109.4 |
| Example 4-2 | C2 | Carbon quantum dot | CA:EDA = 1:2 300°C | 0.5 | 99.8 | 102.8 |
| Example 4-3 | C3 | Carbon quantum dot | CA:EDA = 1:2 340°C | 0.5 | 101.1 | 134.8 |
| Example 4-4 | C4 | Carbon quantum dot | CA:EEDA = 1:2 300°C | 0.1 | 99.8 | 109.0 |
| Example 4-5 | C5 | Carbon quantum dot | CA:AEAE = 1:2 300°C | 0.1 | 101.2 | 106.2 |
| Comparative Example 4-1 | C6 | No addition | | 0 | 100 | 100 |
| Comparative Example 4-2 | C7 | Carbon quantum dot | Only CA 300°C | 0.5 | 90.5 | 64.9 |
| Comparative Example 4-3 | C8 | Carbon particle | Only glucose 250°C | 0.5 | 92.3 | 56.0 |
| Comparative Example 4-4 | C9 | Polyvinylpyrrolidone | | 0.5 | 99.7 | 81.5 |

| | | | | | | |
|---|---|---|---|---|---|---|
| ^{∗}In Table, CA represents citric acid; EDA represents ethylenediamine; EEDA represents N-ethylethylenediamine; AEAE represents 2-(2-aminoethylamino)ethanol; and AB represents acetylene black. | | | | | | |

For the lithium ion secondary batteries produced in Examples 4-1, 4-4, and 4-5 and Comparative Example 4-1, the physical properties of the electrodes were evaluated under the following conditions using a charge/discharge measurement apparatus. Table 2 shows the ratio of a charge capacity at a charge rate during charge at 0.2 C and 10 C of each of the secondary batteries based on the charge capacity of Comparative Example 4-1.

### [Measurement Conditions]

- Rate characteristics:
   Current: constant current charge at 0.2 C, 0.5 C, 3 C, 5 C, 10 C, constant current discharge at 0.2 C (the capacity of Li(Ni_{0.5}Co_{0.2}Mn_{0.3})O₂ was set to 160 mAh/g; and the charge rate for every 2 cycles was increased, and finally, the charge rate was set to 0.5 C)
- Cut off voltage: 4.20 V to 3.00 V
- Temperature: room temperature

**[Table 3]**

| | Electrode | Material | Preparation conditions | Added amount [wt%] | Charge capacity ratio at 0.2 C [%] | Charge capacity ratio at 10 C [%] |
|---|---|---|---|---|---|---|
| Example 4-1 | C1 | Carbon quantum dot | CA:EDA = 1:2 300°C | 0.1 | 100.0 | 108.6 |
| Example 4-4 | C4 | Carbon quantum dot | CA:EEDA = 1:2 300°C | 0.1 | 99.7 | 110.4 |
| Example 4-5 | C5 | Carbon quantum dot | CA:AEAE = 1:2 300°C | 0.1 | 101.2 | 105.4 |
| Comparative Example 4-1 | C6 | No addition | | 0 | 100 | 100 |

| | | | | | | |
|---|---|---|---|---|---|---|
| ^{∗}In Table, CA represents citric acid; EDA represents ethylenediamine; EEDA represents N-ethylethylenediamine; and AEAE represents 2-(2-aminoethylamino)ethanol. | | | | | | |

From the results of Tables 1 and 2, batteries having excellent rate characteristics were confirmed to be obtained by using the battery material containing the carbon nanostructure according to the present invention. The effects were confirmed to be obtained in both cases of charge (input) and discharge (output).

## Claims

1. A battery material comprising a carbon nanostructure, wherein the carbon nanostructure emits light when excited at any wavelength of 300 to 800 nm.

2. The battery material according to claim 1, wherein an absolute quantum yield of the carbon nanostructure is 10% or more.

3. The battery material according to claim 2, wherein the absolute quantum yield of the carbon nanostructure is 30% or more.

4. The battery material according to any one of claims 1 to 3, wherein the carbon nanostructure is a carbon quantum dot.

5. The battery material according to any one of claims 1 to 4, wherein the carbon nanostructure is non-conductive and contains nitrogen.

6. The battery material according to claim 5, wherein the nitrogen is derived from an amine.

7. The battery material according to any one of claims 1 to 6, wherein carbon contained in the carbon nanostructure is derived from a polycarboxylic acid or a saccharide.

8. The battery material according to any one of claims 1 to 7, further comprising an active material, conductive carbon, and a binder.

9. The battery material according to claim 8, wherein the active material is selected from a metal, a metalloid, a metal alloy, a metal oxide, a metalloid oxide, a metal phosphate, a metal sulfide, and a metal nitride.

10. The battery material according to claim 9, wherein the active material is at least one selected from FeS₂, TiS₂, MoS₂, LiFePO₄, V₂O₆, V₆O₁₃, MnO₂, LiCoO₂, LiMnO₂, LiMn₂O₄, LiMo₂O₄, LiV₃O₈, LiNiO₂, Li_{z}Ni_{y}M_{1-y}O₂ (provided that M represents at least one metal element selected from Co, Mn, Ti, Cr, V, Al, Sn, Pb, and Zn, 0.05 ≤ z ≤ 1.10, 0.5 ≤ y ≤ 1.0.), Li(NiₐCo_{b}Mn_{c})O₂ (provided that 0 < a < 1, 0 < b < 1, 0 < c < 1, a + b + c = 1), Li₄Ti₅O₁₂, Si, SiOₓ, AlOₓ, SnOₓ, SbOₓ, BiOₓ, GeOₓ, AsOₓ, PbOₓ, ZnOₓ, CdOₓ, InOₓ, TiOₓ, and GaOₓ (provided that 0 < x ≤ 2).

11. The battery material according to any one of claims 8 to 10, wherein the battery material is an electrode-forming battery material.

12. An electrode comprising an active material layer made of the battery material according to claim 11.

13. A secondary battery comprising the electrode according to claim 12.

14. A method for producing the battery material according to any one of claims 1 to 11, the method comprising the step of synthesizing a carbon nanostructure by mixing a polycarboxylic acid or a saccharide, an amine, and a solvent, followed by heating.

15. The method for producing a battery material according to claim 14, wherein the synthesis is performed by solvothermal synthesis.

16. The method for producing a battery material according to claim 15, wherein the synthesis is performed by hydrothermal synthesis.

17. The method for producing a battery material according to claim 16, comprising the step of replacing a solvent of an aqueous solution of the carbon nanostructure obtained by the hydrothermal synthesis with an organic solvent.

18. A method for producing the battery material according to any one of claims 8 to 10,
the method comprising the step of preparing a solution or dispersion containing an active material and a carbon nanostructure, and then removing a solvent to prepare a composite of an active material-carbon nanostructure.
